# EUROPEAN PATENT SPECIFICATION

(11) **EP 3 756 445 B1**
(45) Date of publication and mention of the grant of the patent: **19.10.2022**
(21) Application number: 20182554.4
(22) Date of filing: 26.06.2020
(51) Int. Cl.: A01D 87/10, A01F 29/06, A01F 29/09

(54) **ARRANGEMENT AND METHOD FOR DOSING OF SILAGE AGENT**
ANORDNUNG UND VERFAHREN ZUR DOSIERUNG VON SILIERMITTEL
AGENCEMENT ET PROCÉDÉ DE DOSAGE D'AGENT D'ENSILAGE

(30) Priority: 26.06.2019 FI 20190048
(43) Date of publication of application: 30.12.2020
(73) Proprietor: Oy El-Ho Ab, 68910 Bennäs (FI)
(72) Inventor: West, Filip, 68910 Bennäs (FI)
(74) Representative: Kolster Oy Ab

(56) References cited:
- EP-A1- 1 935 230
- DE-A1- 1 692 448
- DE-A1-102009 002 102
- DE-A1-102009 029 675
- DE-A1-102017 117 966
- US-A- 3 392 770

## Description

The present invention relates to a a harvester used in agriculture according to the preamble of claim 1, for example a forage harvester, equipped with a collecting unit for collecting straw-shaped crop, such as strands of dried grass, where the harvester further is provided with a chopping rotor equipped with blades and counter-blade to disintegrate the material, and with a silage dispenser and monitoring and control units associated with the machine to minimize the risk of overand under-dosing of silage agent. The present invention also relates to a method for dosing of silage agent in a harvester according to the preamble of claim 5.

When grass is harvested for silage, it is important that the straw-shaped material is first chopped short to allow for as tight compression of the crop in storage silos as possible, to minimize the amount of air whose oxygen content interferes with the anaerobic lactic acid fermentation on which the entire silage is based.

In order to ensure the quality of the silage layer of grass, silage agent is almost always used to speed up the process of silage and bring the pH of the material down to a stable level where lactic acid fermentation no longer occurs.

In the first generation of simple grass harvesters, so-called impact choppers, this arrangement for dosing of silage agent was usually made up of a structure mounted in front of the forager holding a can of silage agent. In use, the can was swung up and down with its holder and when a sensor arm hit the standing crop to be harvested, a simple valve opened which allowed the can to slowly be emptied of its contents, via one or more nozzles in contact with the material stream of chopped grass.

Since this type of grass harvesters were used solely for direct harvesting of growing grass, the chopped material was juicy and the run-off in the silo distributed the silage agent sufficiently accurately for satisfactory silage quality.

When the grass began to be harvested in a dried state to allow for higher energy intake for the ruminant animals, (energy quantity/kg of feed), quality problems arose. Partly because it was difficult to get the dried material sufficiently compressed to minimize the amount of air, and partly to have the silage agent evenly distributed in the material when the proportion of the run-off almost disappeared.

Therefore, pump type silage dispensers were developed, where the pressure with which the silage agent was injected into the material stream was several times higher than the simple "can" models which operated with natural pressure. Such a harvester is described in the publication DE 10 2009 002 102, for instance. This harvester has a tank for silage agent, which is connected with an injection nozzle introducing the silage agent into the air flow transporting the harvested goods.

When the really large, often self-propelled precision forage harvesters came into the picture, the material throughflow in the harvester was multiplied. The self-propelled harvester are almost invariably provided with a collecting unit (pickup) which lifts the material from a large string, centering the crop to the middle where it is fed into a feeding unit equipped with dosing rollers.

Following the feeding unit, a chopping unit itself follows, usually consisting of a fast rotating drum provided with a large number of cutting blades.

These blades cooperate with a stationary counter knife (usually referred to as a counter-blade) to chop the straw-shaped material short (~10 to 40 mm).

The chopping unit also comprises a turbo unit which blows the finely chopped material through a high exhaust pipe, with which the material is guided into the adjacent moving transporter.

In order to be able to accurately control the start and stop and the dosing intensity of the silage dispenser in the above described embodiment of a grass harvester, the simple sensor described above in connection with the impact chopper is not sufficient.

If the dosing of silage agent starts at the moment when the grass starts to be picked up by the machine, a considerable amount of expensive (and for the environment in some cases even harmful) silage agent will blow out through the exhaust pipe, before the stream of chopped grass reaches the exhaust pipe.

Therefore, an alternative arrangement for dosing of silage agent in highly efficient grass harvesting machines has been developed as shown in the description below with the following claims. Thus, the present invention can substantially avoid the problems associated with prior art solutions. The object of the invention is to provide a practical and easy-to-use method and arrangement for dispensing silage agent with considerable reliability. This object is achieved in accordance with the invention by giving the harvester according to the invention the characterising features of claim 1, while the method according to the invention is given the characterising features of claim 5. The corresponding, dependent patent claims given hereinafter set out appropriate further developments and variants of the invention that further improve its functionality.

Below, the operating arrangement of the invention is described with reference to the accompanying Figures 1 to 3.
Fig. 1a and Fig. 1b show the harvester (1) with an attached transporter (16), both towed by the tractor (7).
Fig. 2 shows the same harvester without a connected trailer, but with a container for silage agent connected at the rear of the harvester.
Fig. 3 shows a principle cross-section of the chopping unit with the feeding unit (30).

The above figures do not show an arrangement for dosing of silage agent in scale but only serve to illustrate structural solutions of the preferred embodiment and the operation of the embodiment. Hereby, the individual design elements that are each shown and labelled with a reference number in the attached figures correspond to the design solutions presented, with corresponding reference numbers, in the description given below.

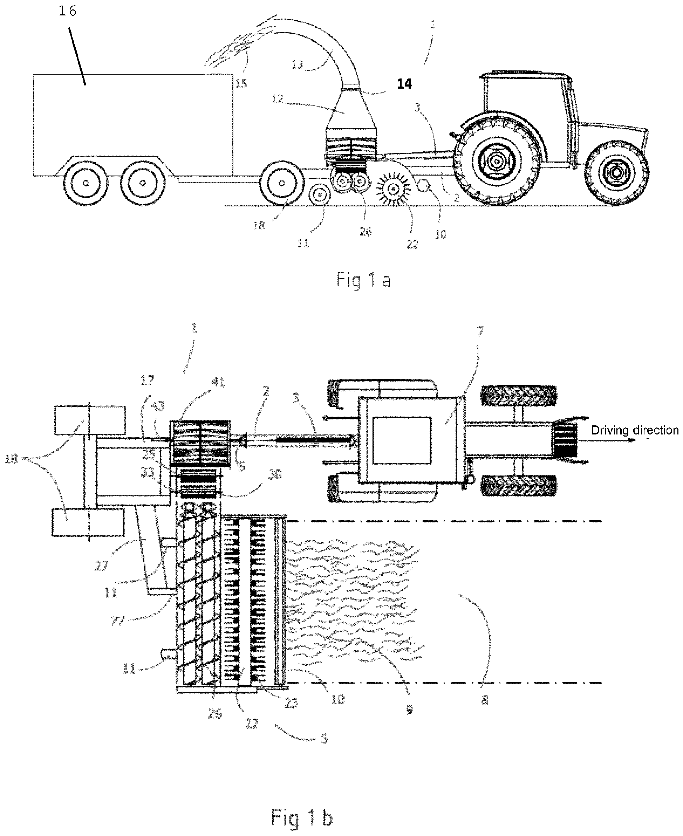

Fig. 1a and 1b thus show an arrangement for dosing of silage agent in a harvester 1 primarily used in agriculture. With such a harvester towed by a tractor 7, a string 9 of straw-shaped crop is collected, such as dried grass. The harvester has a collecting unit 6, which lifts the crop to a screw conveyor unit 26 for further transport to a feed unit 30 of the harvester. The feed unit comprises feed rollers 25 and 33 arranged to press the crop into the actual chopping unit 4 of the harvester and its chopping rotor 41. The PTO shaft 3 from the tractor 7 PTO (1000 rpm) directly drives the chopping unit's chopping rotor. The chopping rotor is equipped with blades 42, which, together with a counter-blade 40, cut the straw-shaped material short. A turbo unit 44 of the chopping rotor, then blows the short chopped material via an exhaust pipe 13 to a connecting transporter 16.

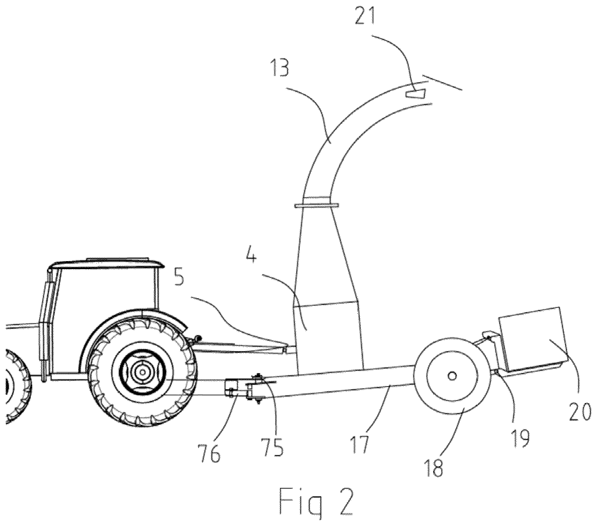

Fig. 2 shows the same harvester 1 in a side view in its transport mode. Here one can especially note a lifting device 19 for the harvester's silage agent container 20, arranged at the rear of the harvester.

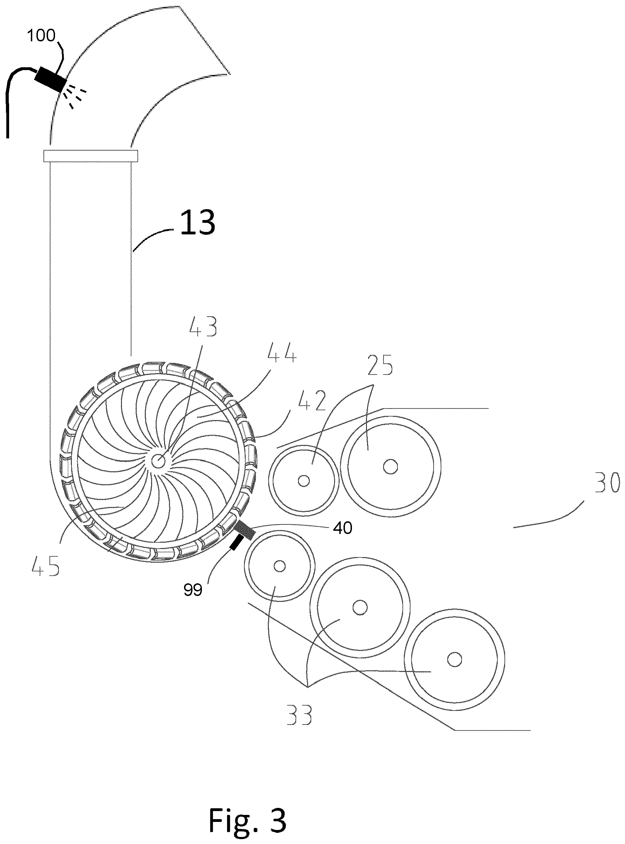

Fig. 3 shows a principal cross-section of the chopping unit 4 consisting of a chopping rotor 41 with the blades 42 of the harvester evenly distributed around its periphery. These blades cooperate with the counter-blade 40 to cut short the straw-shaped material fed by the feed rollers 25 and 33.

The turbo unit 44 of the chopper rotor 41 with impellers 45 blows the finely chopped material through the exhaust pipe 13 connected to the turbo unit to the transporter. The exhaust pipe is equipped with one or more injection nozzles 100 connected to a silage agent dispenser. An operating unit is arranged to start and stop the silage agent dispenser.

A knock sensor 99 is mounted for the counter-blade 40 or for its attachment. This knock sensor is arranged to sense vibrations, which occur when the blades 42 process the straw-shaped crop against the counter-blade 40. The knock sensor is herewith arranged to produce a signal flow, which is forwarded to the operating unit, which, based on the changes, can regulate the silage agent dispenser. In an advantageous embodiment, this consists of a piezo electric sensor together with a knock sensor interface.

To minimise background noise from the harvester's other vibration sources, it is possible to let the knock sensor's 99 signals pass a special bandpass filter.

The function for the dispenser arrangement according to the present invention is as follows.

The knock sensor 99 detects the vibrations in the counter-blade 40 when straw-shaped material passes across the counter-blade and is chopped short between the blades 42 and the counter-blade. The signal registered by the knock sensor 99 is further processed when it passes a programmable bandpass filter, to extract the frequency of interest, i.e., the chopping signals when the blades 42 cut the straw-shaped material against the counter-blade 40.

The bandpass filter eliminates background noise from the harvester's other vibration sources. Their background noise usually has a low amplitude compared with the noise from the above described high-frequency chopping operation.

Since the nominal speed of the chopping rotor is known, as well as the number of blades on its periphery, the vibration frequency arising when the straw-shaped material enters between the blade and the counter-blade can be carefully defined. Accordingly, other frequencies can be precisely filtered out and a very marked signal change is obtained as soon as material begins to be chopped short.

When the control system, in the manner described above, has detected that straw-shaped material passes over the counter-blade, the silage agent dispenser is started immediately and the silage agent is injected into the material. The injection nozzles 100 for the silage agent can advantageously be mounted on the "back side" of the exhaust pipe 13, in a place where the jet of finely chopped material lies close to the inner wall of the exhaust pipe, e.g. in the outer curve of a bend.

In order to optimize the function of the silage agent dispenser, the operating unit can continuously record information during operation on the rotational resistance of the feed rollers 25 and 33. This information can then be used together with the information filtered from the knock sensor 99 to control the dosage amount from the silage agent dispenser.

Through practical measurements, the distance between the counter-blade 40 to the injection nozzles can be optimized so that the time required for the material chopped short at the counter-blade to reach the injection nozzles 100 corresponds to the start-up time of the dosing device pump.

The main advantage of the invention lies in the fact that it effectively eliminates the harmful silage agent spillage, which occurs when silage agent is blown straight into the air. This always occurs if the dispenser injects the agent into the exhaust pipe without the injection nozzles 100 being covered by a stream of short chopped straw-shaped material. Short chopped material made of dried grass quickly binds the silage agent that is pressed straight into the material stream.

The dosing arrangement according to the invention contributes to higher silage quality due to a dosing uniformity which was previously unattainable with traditional arrangements for application of silage agents during silage.

A great advantage also lies in the safer working environment which is achieved when a "fog" of silage agent is no longer blown out and evaporated through the harvester's exhaust pipe 13, so that the "fog" can be easily inhaled especially by the tractor driver for the transporter 16, but also by flying insects and small bugs on the ground.

The ability to tune the distance of the injection nozzles 100 to the counter-blade 40 also contributes to a higher silage quality. This distance can thus be adjusted in relation to the start-up time of the silage agent dispenser. In this case, the silage agent begins to flow out of the injection nozzles 100 when the flow of the chopped crop reaches the injection nozzle or nozzles 100.

The invention also contributes to a lower silage agent consumption by reducing waste and thus providing better economy when harvesting straw-shaped material.

The invention is not limited to the above advantageous embodiment, but a number of variations thereof are conceivable within the scope of the following claims.

## Claims

1. A harvester (1) used in agriculture, said harvester comprising
a collecting unit (6) for collecting straw-shaped crop(9),
a feed unit (30), and
a chopping unit (4) with a chopping rotor (41) equipped with blades (42) which, together with a counter-blade (40), cut the straw-shaped crop (9) short,
a silage agent dispenser, and
an operating unit,
**characterized in that**
the chopping unit (4) is provided with a knock sensor (99) arranged to sense the vibrations which occur when the blades (42) cut the straw-shaped crop against the counter-blade (40) and that
the knock sensor is arranged to direct a signal flow to the operating unit, wherein changes in the knock sensor's signal flow are arranged to start or stop the silage agent dispenser.

2. A harvester according to the preceding claim 1, is **characterised in that** the knock sensor (99) is fitted to the counter-blade (40) or to its attachment.

3. A harvester according to any or several of the preceding claims, **characterised in that** the harvester is provided with a bandpass filter arranged to minimize background noise from other vibration sources of the harvester in the signals of the knock sensor (99).

4. A harvester according to any one or several of the preceding claims, **characterized in that** the distance of injection nozzles (100) of the silage agent dispenser to the counter-blade (40) is adjusted to the silage agent dispenser's start-up time.

5. A method for dosing of silage agent in a harvester (1) primarily used in agriculture wherein
a collecting unit (6) collects straw-shaped crop(9),
a feed unit (30) forwards the material to a chopping unit (4), and
a chopping rotor (41) equipped with blades (42) together with a counter-blade (40) cut the straw-shaped crop short,
a silage agent dispenser controlled by an operating unit injects silage agent into the material,
**characterized in that**
a knock sensor (99) detects the vibrations which occur when the blades (42) cut the straw-shaped crop against the counter-blade (40) and
the operating unit starts and stops the silage agent dispenser based on the changes in the knock sensor's signal flow.

6. A method according to claim 5, **characterized in that** the knock sensor (99) is fitted to the counter-blade (40) or to its attachment.

7. A method according to claim 5 or 6, **characterised in that** the knock sensor's (99) signals pass a bandpass filter to minimise background noise from the harvester's (1) other vibration sources.

8. A method according to one or several of claim 7,
**characterised in that** information on the number of blades (42) on the chopping rotor's (41) periphery together with information on the instantaneous rotational speed of the chopping rotor is used to define the frequency of interest that the bandpass filter should not filter out.

9. A method according to one or several of claims 5 - 8, **characterised in that** during operation, the operating unit continuously records information about the rotational resistance of feed rollers (25, 33) of the feed unit (30) and that this information together with the information filtered from the knock sensor (99) is also used to regulate the dosing amount from the silage agent dispenser.

10. A method according to one or several of claims 5 - 9, **characterised in that** the operating unit starts and stops the silage agent dispenser so that silage agent, via injection nozzles (100) of the silage agent dispenser, is pushed into the material stream of short chopped straw-shaped material.

11. A method according to claim 10, **characterised in that** the silage agent begins to flow out of the injection nozzles (100) when the flow of the chopped crop reaches the injection nozzle or nozzles (100).

12. A method according to claim 10, **characterised in that** the distance of the injection nozzles (100) to the counter-blade (40) is adjusted in relation to the start-up time of the silage agent dispenser so that the silage agent begins to flow out of the injection nozzles (100) when the flow of the chopped crop reaches the injection nozzles or nozzles (100).

13. A method according to claim 10, **characterised in that** the distance of the injection nozzles (100) to the counter-blade (40) is adjusted so that the time required for the short-chopped material at the counter-blade to reach the injection nozzles corresponds to the start-up time of a pump operating the dosing device.

## Patentansprüche

1. Erntemaschine (1), die in der Landwirtschaft verwendet wird, wobei die Erntemaschine Folgendes umfasst
eine Sammeleinheit (6) zum Sammeln von strohförmigem Erntegut (9),
eine Zuführeinheit (30), und
eine Schneideinheit (4) mit einem Schneidrotor (41), der mit Klingen (42) ausgerüstet ist, die zusammen mit einer Gegenklinge (40) das strohförmige Erntegut (9) kurz schneiden,
einen Siliermittelspender, und
eine Betriebseinheit,
**dadurch gekennzeichnet, dass**
die Schneideinheit (4) mit einem Klopfsensor (99) versehen ist, der angeordnet ist, die Schwingungen zu erfassen, die auftreten, wenn die Klingen (42) das strohförmige Erntegut gegen die Gegenklinge (40) schneiden, und dass
der Klopfsensor angeordnet ist, einen Signalfluss zur Betriebseinheit zu leiten, wobei Änderungen beim Signalfluss des Klopfsensors angeordnet sind, den Siliermittelspender zu starten oder zu stoppen.

2. Erntemaschine nach dem vorhergehenden Anspruch 1 ist **dadurch gekennzeichnet, dass** der Klopfsensor (99) an der Gegenklinge (40) oder deren Befestigung montiert ist.

3. Erntemaschine nach einem oder mehreren der vorhergehenden Ansprüche, **dadurch gekennzeichnet, dass** die Erntemaschine mit einem Bandpassfilter versehen ist, das angeordnet ist, Hintergrundgeräusche von anderen Schwingungsquellen der Erntemaschine in den Signalen des Klopfsensors (99) zu minimieren.

4. Erntemaschine nach einem oder mehreren der vorhergehenden Ansprüche, **dadurch gekennzeichnet, dass** der Abstand von Einspritzdüsen (100) des Siliermittelspenders zur Gegenklinge (40) auf die Startzeit des Siliermittelspenders eingestellt ist.

5. Verfahren zum Dosieren von Siliermittel in einer Erntemaschine (1), die hauptsächlich in der Landwirtschaft verwendet wird, wobei
eine Sammeleinheit (6) strohförmiges Erntegut (9) sammelt,
eine Zuführeinheit (30) das Material zu einer Schneideinheit (4) weiterleitet, und
ein Schneidrotor (41), der mit Klingen (42) ausgerüstet ist, zusammen mit einer Gegenklinge (40) das strohförmige Erntegut kurz schneidet,
ein Siliermittelspender, der von einer Betriebseinheit gesteuert wird, Siliermittel in das Material einspritzt,
**dadurch gekennzeichnet, dass**
ein Klopfsensor (99) die Schwingungen detektiert, die auftreten, wenn die Klingen (42) das strohförmige Erntegut gegen die Gegenklinge (40) schneiden, und
die Betriebseinheit den Siliermittelspender auf Basis der Änderungen beim Signalfluss des Klopfsensors startet und stoppt.

6. Verfahren nach Anspruch 5, **dadurch gekennzeichnet, dass** der Klopfsensor (99) an der Gegenklinge (40) oder deren Befestigung montiert ist.

7. Verfahren nach Anspruch 5 oder 6, **dadurch gekennzeichnet, dass** die Signale des Klopfsensors (99) ein Bandpassfilter durchlaufen, um Hintergrundgeräusche von anderen Schwingungsquellen der Erntemaschine (1) zu minimieren.

8. Verfahren nach einem oder mehreren von Anspruch 7, **dadurch gekennzeichnet, dass** Informationen über die Anzahl von Klingen (42) und über die Peripherie des Schneidrotors (41) zusammen mit Informationen über die momentane Drehgeschwindigkeit des Schneidrotors verwendet werden, um die Frequenz von Interesse zu definieren, die das Bandpassfilter nicht herausfiltern sollte.

9. Verfahren nach einem oder mehreren der Ansprüche 5-8, **dadurch gekennzeichnet, dass** die Betriebseinheit während des Betriebs kontinuierlich Informationen über den Drehwiderstand von Zuführwalzen (25, 33) der Zuführeinheit (30) aufzeichnet und dass diese Informationen zusammen mit den Informationen, die aus dem Klopfsensor (99) gefiltert werden, auch verwendet werden, um die Dosiermenge vom Siliermittelspender zu regeln.

10. Verfahren nach einem oder mehreren der Ansprüche 5-9, **dadurch gekennzeichnet, dass** die Betriebseinheit den Siliermittelspender startet und stoppt, derart, dass Siliermittel via Einspritzdüsen (100) des Siliermittelspenders in den Materialstrom von kurz geschnittenem strohförmigen Material gedrückt wird.

11. Verfahren nach Anspruch 10, **dadurch gekennzeichnet, dass** das Siliermittel aus den Einspritzdüsen (100) zu fließen beginnt, wenn der Fluss des geschnittenen Ernteguts die Einspritzdüse oder -düsen (100) erreicht.

12. Verfahren nach Anspruch 10, **dadurch gekennzeichnet, dass** der Abstand der Einspritzdüsen (100) von der Gegenklinge (40) mit Bezug auf die Startzeit des Siliermittelspenders eingestellt ist, derart, dass das Siliermittel aus den Einspritzdüsen (100) zu fließen beginnt, wenn der Fluss des geschnittenen Ernteguts die Einspritzdüsen oder -düsen (100) erreicht.

13. Verfahren nach Anspruch 10, **dadurch gekennzeichnet, dass** der Abstand der Einspritzdüsen (100) von der Gegenklinge (40) derart eingestellt ist, dass die Zeit, die das kurz geschnittene Material an der Gegenklinge benötigt, um die Einspritzdüsen zu erreichen, der Startzeit einer Pumpe entspricht, von der die Dosiervorrichtung betrieben wird.

## Revendications

1. Moissonneuse (1) utilisée en agriculture, ladite moissonneuse comprenant :
une unité de collecte (6) pour collecter la récolte en forme de paille (9),
une unité d'alimentation (30), et
une unité de coupe (4) avec un rotor de coupe (41) équipé de lames (42) qui, conjointement avec une lame antagoniste (40), coupent court la récolte en forme de paille (9),
un distributeur d'agent d'ensilage, et
une unité opérationnelle,
**caractérisée en ce que** :
l'unité de coupe (4) est prévue avec un capteur de cliquetis (99) agencé pour détecter les vibrations qui ont lieu lorsque les lames (42) coupent la récolte en forme de paille contre la lame antagoniste (40), et **en ce que**
le capteur de cliquetis est agencé pour diriger un flux de signaux vers l'unité opérationnelle, dans laquelle des changements dans le flux de signaux du capteur de cliquetis sont agencés pour actionner ou arrêter le distributeur d'agent d'ensilage.

2. Moissonneuse selon la revendication 1, est **caractérisée en ce que** le capteur de cliquetis (99) est monté sur la lame antagoniste (40) ou sa fixation.

3. Moissonneuse selon l'une quelconque ou plusieurs des revendications précédentes, **caractérisée en ce que** la moissonneuse est prévue avec un filtre passe-bande agencé pour minimiser le bruit de fond provenant des autres sources de vibration de la moissonneuse dans les signaux du capteur de cliquetis (99).

4. Moissonneuse selon l'une quelconque ou plusieurs des revendications précédentes, **caractérisée en ce que** la distance des buses d'injection (100) du distributeur d'agent d'ensilage jusqu'à la lame antagoniste (40) est réglée sur le temps de démarrage du distributeur d'agent d'ensilage.

5. Procédé pour doser l'agent d'ensilage dans une moissonneuse (1) principalement utilisée en agriculture, dans lequel :
une unité de collecte (6) collecte la récolte en forme de paille (9),
une unité d'alimentation (30) fait avancer le matériau jusqu'à une unité de coupe (4), et
un rotor de coupe (41) équipé de lames (42) conjointement avec une lame antagoniste (40) coupent court la récolte en forme de paille,
un distributeur d'agent d'ensilage commandé par une unité opérationnelle injecte l'agent d'ensilage dans le matériau,
**caractérisé en ce que** :
un capteur de cliquetis (99) détecte les vibrations qui se produisent lorsque les lames (42) coupent la récolte en forme de paille contre la lame antagoniste (40), et
l'unité opérationnelle démarre et arrête le distributeur d'agent d'ensilage sur la base des changements dans le flux de signaux du capteur de cliquetis.

6. Procédé selon la revendication 5, **caractérisé en ce que** le capteur de cliquetis (99) est monté sur la lame antagoniste (40) ou sur sa fixation.

7. Procédé selon la revendication 5 ou 6, **caractérisé en ce que** les signaux du capteur de cliquetis (99) passent par un filtre passe-bande afin de minimiser le bruit de fond provenant des autres sources de vibration de la moissonneuse (1).

8. Procédé selon une ou plusieurs de la revendication 7, **caractérisé en ce que** l'information concernant le nombre de lames (42) à la périphérie du rotor de coupe (41) conjointement avec l'information concernant la vitesse de rotation instantanée du rotor de coupe est utilisée afin de définir la fréquence d'intérêt que le filtre passe-bande ne doit pas filtrer.

9. Procédé selon une ou plusieurs des revendications 5 à 8, **caractérisé en ce que** pendant le fonctionnement, l'unité opérationnelle enregistre en continu l'information concernant la résistance à la rotation des rouleaux d'alimentation (25, 33) de l'unité d'alimentation (30) et **en ce que** cette information conjointement avec l'information filtrée provenant du capteur de cliquetis (99) est également utilisée pour réguler la quantité de dosage du distributeur d'agent d'ensilage.

10. Procédé selon une ou plusieurs des revendications 5 à 9, **caractérisé en ce que** l'unité opérationnelle démarre et arrête le distributeur d'agent d'ensilage de sorte que l'agent d'ensilage, via les buses d'injection (100) du distributeur d'agent d'ensilage, est poussé dans le flux de matériau du matériau en forme de paille coupé court.

11. Procédé selon la revendication 10, **caractérisé en ce que** l'agent d'ensilage commence à sortir des buses d'injection (100) lorsque le flux de récolte coupée atteint la buse ou les buses d'injection (100).

12. Procédé selon la revendication 10, **caractérisé en ce que** la distance des buses d'injection (100) jusqu'à la lame antagoniste (40) est réglée par rapport au temps de démarrage du distributeur d'agent d'ensilage de sorte que l'agent d'ensilage commence à sortir des buses d'injection (100) lorsque le flux de récolte coupée atteint les buses d'injection ou les buses (100).

13. Procédé selon la revendication 10, **caractérisé en ce que** la distance des buses d'injection (100) jusqu'à la lame antagoniste (40) est réglée de sorte que le temps requis pour que le matériau coupé court au niveau de la lame antagoniste atteigne les buses d'injection, correspond au temps de démarrage d'une pompe actionnant le dispositif de dosage.
